# EUROPÄISCHE PATENTSCHRIFT

(11) **EP 1 367 426 B1**
(45) Veröffentlichungstag und Bekanntmachung des Hinweises auf die Patenterteilung: **19.07.2006**
(21) Anmeldenummer: 03010864.1
(22) Anmeldetag: 15.05.2003
(51) Int. Cl.: G02C 1/04

(54) **Brille**
Spectacles
Lunettes

(30) Priorität: 28.05.2002 DE 10223833
(43) Veröffentlichungstag der Anmeldung: 03.12.2003
(73) Patentinhaber: Rodenstock GmbH, 80469 München (DE)
(72) Erfinder: Wandinger, Jakob, 84478 Waldkraiburg (DE)

(56) Entgegenhaltungen:
- EP-A- 0 955 560
- WO-A-99/67675
- US-A- 2 516 549
- US-A- 4 380 379
- US-A- 4 466 713

## Beschreibung

Die Erfindung betrifft eine Brille gemäß Oberbegriff des Patentanspruchs 1.

Es sind Brillen bekannt, bei denen die Brillengläser an der Fassung mit Fäden, die in kleinen Nuten oder Rillen in den Glasrändern geführt sind, fixiert werden. Die Fäden können z. B. aus Kunststoff oder aus Stahldraht bestehen. Derartige Brillen können so aufgebaut sein, dass ein Teil der zur Glashalterung dienenden Umfassung aus einem mehr oder weniger dehnbaren Faden besteht. Dabei greifen der "feste" Teil der Umfassung und der dehnbare Faden in eine tiefe Rille am Umfang des Glases ein. Damit ist es möglich, sehr unauffällige Glasbefestigungen zu realisieren und auf den bei stabilen Rändern erforderlichen Schließblock zu verzichten. Für das Handling, den Transport und vor allem für die Kundenpräsentation ist die Verglasung solcher Fassungen mit Hilfsscheiben, auch "Demolinsen" genannt, unverzichtbar. Speziell bei sehr filigranen Fassungen, bei denen der feste Teil der Umfassung oft nur aus einem dünnen Draht besteht, muss der Faden bereits beim Verglasen mit den Hilfsscheiben stramm gespannt werden, um ausreichende mechanische Stabilität der Fassung und Festsitz der Gläser zu erzielen. Wenn dann die Hilfsscheiben beim Optiker vor dem Einsetzen der Wirkungsgläser herausgenommen werden, findet sich meist kein geeigneter Ansatzpunkt, um den Faden zu fassen und aus der Glasrille zu ziehen. Meist werden dann spitze oder schneidenähnliche ausgebildete Werkzeuge zu Hilfe genommen, um an irgendeiner Stelle unter den Faden zu kommen. Nicht selten werden dabei die Fassungen verbogen oder verkratzt und/oder Fäden abgerissen. Im Sinn der Erfindung werden unter Brillengläsern sowohl Hilfsscheiben, d.h. Gläser ohne optische Wirkung, als auch Brillengläser mit optischer Wirkung verstanden. Die Brillenfassungen der gattungsgemäßen Brillen werden auch als Halbrandfassungen oder Nylonfassungen bezeichnet.

Aufgabe der vorliegenden Erfindung ist es, eine Brille der eingangs beschriebenen Art so weiterzubilden, dass ein einfaches Herausnehmen der Gläser aus der Fassung möglich ist, wobei der Festsitz der Gläser nicht beeinträchtigt wird. Diese Hilfe bei dem Herausnehmen der z.B. Hilfsscheiben sollte darüberhinaus möglichst unauffällig sein.
Diese Aufgabe wird durch das im kennzeichnenden Teil des Anspruchs 1 angegebene Merkmal gelöst.

Die Rille im Rand eines Brillenglases besitzt ein U-förmiges Profil. Die Ausnehmung ist derart ausgebildet, dass einer der beiden Schenkel in einem Bereich des Brillenglases entfernt ist, und die Ausnehmung tangential zum Rillengrund verläuft. An dieser Stelle kann nun der Faden mit Hilfe eines flachen Gegenstandes, z.B. mit Hilfe eines Falzbeines oder auch eines kräftigen Fingernagels ohne Schädigung der Fassung oder des Fadens aus der Rille gedrückt werden. Der erfindungsgemäße Vorgeschlag stellt somit eine nahezu unsichtbare Verglasunghilfe dar, die z. B. das Herausnehmen der Hitfsscheiben vor dem Verglasen bei sog. "Halbrandfassungen" ganz erheblich erleichtert.

Bevorzugte Ausgestaltungen der Erfindung sind in den Unterabsprüchen angegeben.
Ist die Ausnehmung an der Rückseite des Glases angebracht ist und reicht sie bis zum Durchmesser des Rillengrundes, so ist sie nahezu unsichtbar und wird nicht als störend empfunden.

Weitere Merkmale, Einzelheiten und Vorteile der Erfindung ergeben sich aufgrund der nachfolgenden Beschreibung eines Ausführungsbeispiels sowie anhand der Zeichnungen. Diese zeigen in
- Fig.1: einen Teil einer Brille mit einer Brillenfassung, zwei Brillengläsern und fadenförmigen Glashalterungen,
- Fig. 2: eine vergrößerte Darstellung des in Fig. 1 umrahmten Bereichs
- Fig. 3: einen Schnitt durch den Brillenglasrandbereich an der Stelle a-a
- Fig. 4: einen Schnitt durch den Brillenglasrandbereich an der Stelle b-b

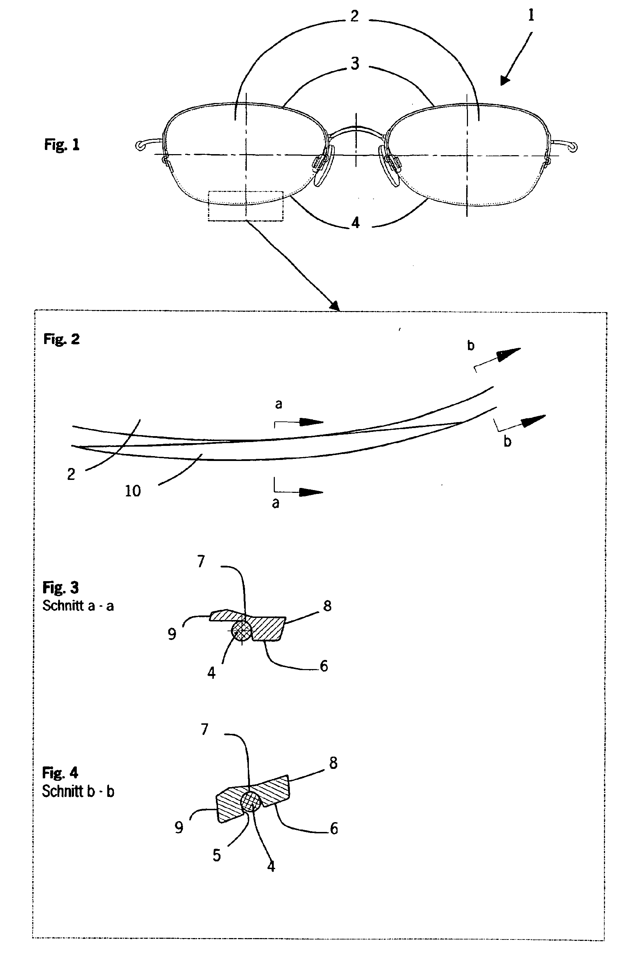

In den Figuren sind übereinstimmende Teile mit denselben Bezugszeichen versehen. Fig. 1 zeigt eine Brille 1, die u.a. aus einer Brillenfassung 3 mit zwei Brillengläsern 2 besteht. Jedes Brillenglas ist in seinem unteren Bereich von einer fadenförmigen Glashalterung 4 umfasst. Die Glashalterung ist ein dehnbarer Faden aus Kunststoff, durch den das Brillenglas 2 an der Brillenfassung 3 gehalten wird. Im Rand 6 des Brillenglases befindet sich eine Rille 5. Die fadenförmigen Glashalterung 4 greift in diese Rille ein. Die beiden Enden der Glashalterung 4 sind in der Brillenfassung fixiert. Im Bereich außerhalb der Brillenfassung 3, genauer innerhalb des mit einem Rahmen umfaßten Bereichs befindet sich eine Ausnehmung 10. Im Ausführungsbeispiel befindet sich die Ausnehmung 10 in der Rückfläche, d.h. in der dem Auge eines Brillenträgers zugewandten Brillenglasfläche. Die andere Brillenglasfläche trägt das Bezugszeichen 8. Die Ausnehmung 10 verläuft tangential bis zum Rillengrund 7. Im Ausführungsbeispiel ist lediglich eine Ausnehmung 10 dargestellt. Grundsätzlich ist es jedoch möglich, auch zwei oder mehrere Ausnehmungen vorzusehen. Im Ausführungsbeispiel ist das dargestellte Brillenglas eine Hitfsscheibe, d.h. ein Brillenglas ohne optische Wirkung.

## Patentansprüche

1. Brille (1), bei der jedes Brillenglas (2) wenigstens bereichsweise von einer fadenförmigen, dehnbaren, das Brillenglas (2) an der Brillenfassung haltenden Glashalterung (4) umfasst ist, wobei die Glashalterung (4) in eine Rille (5) im Rand (6) des Brillenglases (2) eingreift und die beiden Enden der Glashalterung (4) in der Brillenfassung (3) fixiert sind, **dadurch gekennzeichnet, dass** die Brillengläser im Bereich außerhalb der Brillenfassung (3) wenigstens eine tangential bis zum Rillengrund (7) verlaufende Ausnehmung (10) in der Vorder- (8) oder Rückfläche (9) des Brillenglases (2) aufweisen.

2. Brille nach Anspruch 1, **dadurch gekennzeichnet, dass** sich die Ausnehmung (10) in der dem Auge eines Brillenträgers zugewandten Rückfläche (9) des Brillenglases (2) befindet.

3. Brille nach einem der Ansprüche 1 oder 2, **dadurch gekennzeichnet, dass** die Glashalterung aus Kunststoff besteht.

4. Brille nach einem der Ansprüche 1 oder 2, **dadurch gekennzeichnet, dass** die Glashalterung ein Stahldraht ist.

5. Brille nach einem der Ansprüche 1 bis 4, **dadurch gekennzeichnet, dass** ein Brillenglas zwei oder mehrere Ausnehmungen (10) hat.

6. Brille nach einem der Ansprüche 1 bis 5, **dadurch gekennzeichnet, dass** das Brillenglas eine Hilfsscheibe ist.

7. Brille nach einem der Ansprüche 1 bis 6, **dadurch gekennzeichnet, dass** das Brillenglas ein Glas mit optischer Wirkung ist.

## Claims

1. Spectacles (1), wherein each spectacle lens (2) is enclosed, at least in some areas, by a thread-like, flexible glass mounting (4) holding the spectacle lens (2) on the spectacle frame, wherein the glass mounting (4) engages into a groove (5) in the edge (6) of the spectacle lens (2) and the two ends of the glass mounting (4) are fixed in the spectacle frame (3), **characterised in that** in the area outside the spectacle frame (3) the spectacle lenses have at least one recess (10) extending tangentially as far as the groove base (7) in the front (8) or rear face (9) of the spectacle lens (2).

2. Spectacles according to Claim 1, **characterised in that** the recess (10) is located in the rear face (9) of the spectacle lens (2) facing the eye of a spectacle wearer.

3. Spectacles according to one of Claims 1 or 2, **characterised in that** the glass mounting is made of plastic.

4. Spectacles according to one of Claims 1 or 2, **characterised in that** the glass mounting is a steel wire.

5. Spectacles according to one of Claims 1 to 4, **characterised in that** a spectacle lens has two or more recesses (10).

6. Spectacles according to one of Claims 1 to 5, **characterised in that** the spectacle lens is an auxiliary lens.

7. Spectacles according to one of Claims 1 to 6, **characterised in that** the spectacle lens is a lens with optical effect.

## Revendications

1. Paire de lunettes (1), dans laquelle chaque verre de lunette (2) est inséré, au moins par zone, dans un support de fixation du verre (4) extensible, sous forme de fil, maintenant le verre le lunette (2) sur la monture, moyennant quoi le support de fixation du verre (4) mord dans une rainure (5) au bord (6) du verre de lunette (2), et les deux extrémités du support de fixation du verre (4) sont fixées dans la monture (3),
**caractérisée en ce que** les verres de lunette présentent, dans la zone extérieure à la monture (3), au moins un évidement (10) s'étendant tangentiellement jusqu'à la base de la rainure (7) dans la surface avant (8) ou arrière (9) du verre de lunette (2).

2. Paire de lunettes selon la revendication 1, **caractérisée en ce que** l'évidement (10) se trouve dans la surface arrière (9) du verre de lunette (2), orientée vers l'oeil de l'utilisateur.

3. Paire de lunettes selon l'une quelconque des revendications 1 ou 2, **caractérisée en ce que** le support de fixation du verre est constitué de matière plastique.

4. Paire de lunettes selon l'une quelconque des revendications 1 ou 2, **caractérisée en ce que** le support de fixation du verre est un fil d'acier.

5. Paire de lunettes selon l'une quelconque des revendications 1 à 4, **caractérisée en ce que** le verre de lunette comporte deux évidements (10) ou plus.

6. Paire de lunettes selon l'une quelconque des revendications 1 à 5, **caractérisée en ce que** le verre de lunette est un accessoire.

7. Paire de lunettes selon l'une quelconque des revendications 1 à 6, **caractérisée en ce que** le verre de lunette est un verre ayant un effet optique.
